# EUROPEAN PATENT SPECIFICATION

(11) **EP 3 621 499 B1**
(45) Date of publication and mention of the grant of the patent: **18.11.2020**
(21) Application number: 18728760.2
(22) Date of filing: 07.05.2018
(51) Int. Cl.: A47J 37/06

(54) **AUTONOMOUS APPARATUS FOR COOKING FOOD**
AUTONOME VORRICHTUNG ZUM KOCHEN VON NAHRUNGSMITTELN
APPAREIL AUTONOME DE CUISSON D'ALIMENTS

(30) Priority: 08.05.2017 IT 201700049659
(43) Date of publication of application: 18.03.2020
(73) Proprietor: De' Longhi Appliances S.r.l. Con Unico Socio, 31100 Treviso (IT)
(72) Inventor: DE' LONGHI, Giuseppe, 31100 Treviso (IT); MAZZON, Renzo, 31100 Treviso (IT)
(74) Representative: Petraz, Gilberto Luigi
(86) International application number: PCT/IT2018/050080
(87) International publication number: WO 2018/207221

(56) References cited:
- EP-A1- 2 292 128
- EP-A1- 2 807 960
- WO-A1-2015/028940
- US-B1- 6 201 217

## Description

### FIELD OF THE INVENTION

The present invention concerns an autonomous apparatus for cooking food comprising a support body, a lid that can be opened/closed with respect to the support body and a container for the food.

The autonomous apparatus also comprises at least one heating device and at least one main ventilation device.

### BACKGROUND OF THE INVENTION

In the domestic environment, autonomous apparatuses for cooking food are known, comprising a support body located below, suitable to contain and position an internal container open at the top.

The support body is provided with a closing/opening lid to create, together with the container, a cooking chamber having a controlled atmosphere suitable for the cooking to be performed.

The controlled atmosphere is generated by at least one heating device, that is, a device producing thermal energy, and a main ventilation device able to transfer, in a desired manner, the thermal energy inside the container.

In autonomous apparatuses it is known to provide the heating device and the main ventilation device disposed above the container, or disposed inside the cooking chamber.

In particular, the ventilation and heating devices normally cooperate directly with the lid.

In particular, the lid is normally defined by a casing, defining an upper and external surface, and a lower wall, facing inside the cooking chamber. Between the casing and the lower wall there is a containing compartment in which a motor member is normally disposed, to drive the ventilation device.

It is also known to have an auxiliary ventilation device which generates an air flow to cool the containing compartment, in particular to cool the motor member.

It happens that the temperature inside the containing compartment is only suitable for the installation of some components, and does not allow, for example, to insert electric and electronic equipment that are particularly sensitive to heat.

Therefore, electric and electronic equipment is normally installed laterally to the support body, which entails enlarging the support body and, with it, at least partly enlarging the lid. This makes the autonomous apparatus bulky, and also makes the operations of installation and electric connection, as well as the maintenance and/or repair operations, rather complicated.

EP 2.807.960 describes an autonomous cooking apparatus comprising a lid open at the bottom part, on which a flange is applied having a central hole for the application of the fan and the heating element.

EP 2.292.128 and US 6.201.217 describe other solutions of autonomous cooking apparatuses of the prior art.

One purpose of the present invention is to provide an autonomous apparatus for cooking food which guarantees optimum insulation from the heat, at least of the containing compartment.

Another purpose is to provide protected compartments in the lid in which to place the electric and electronic equipment.

Another purpose is to keep the space existing between the external casing of the lid and a conveyor element at an acceptable temperature, that is, the so-called protected compartments that enclose the motor member for the electric and electronic equipment.

Another purpose is to provide an autonomous apparatus that guarantees a disposition of the electric and electronic equipment in the protected compartments such that the installation and maintenance operations are simplified.

Another purpose is to provide an autonomous apparatus that is compact and easy to use for the user.

Another purpose is to make the lower part of the autonomous apparatus substantially free of electric and electronic equipment.

Another purpose is to provide an autonomous apparatus that allows easy and convenient maintenance interventions.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, the present invention concerns an autonomous apparatus for cooking food comprising a support body, a lid associated with the support body and able to be driven with respect to it, a container positioned inside the support body, in which, in the closed condition, the lid cooperates with the container to define a cooking chamber.

According to a variant embodiment, the support body has an internal containing wall that cooperates with the container to create an intermediate chamber.

The intermediate chamber has the advantage, on the one hand, of reducing the empty space around the container, thus reducing dispersions, and on the other hand, of being able to position auxiliary heat generator devices very near the container.

According to a variant embodiment, the auxiliary heat generator devices consist of a lower heating device, or electric resistance, installed on the internal wall of the support body and which cooperates with the bottom of the container.

The autonomous apparatus also comprises at least an upper heating device located above the container, and at least a main ventilation device associated with the upper heating device, in order to move the heat according to a desired circuit also in relation with the food present in the container.

The container has a support edge that cooperates with circumferential support means associated with the external wall of the support body to create a compartmentation between the internal part of the container and the intermediate chamber, preventing splashes, or other, from invading the intermediate chamber.

In addition, the container can be associated with a handle that can have one or more positions with respect to the container, in order to facilitate handling.

The lid comprises an external casing and a lower wall, facing toward the cooking chamber, to define on one side a cooking chamber and on the other side a multifunctional containing compartment.

The lower wall cooperates, advantageously, with a bell element with the aperture facing toward the container, and able to contain the main ventilation device that cooperates circumferentially with the upper heating device.

The bell conformation promotes the circulation of the air in a desired manner.

According to one aspect of the present invention, the lower wall of the lid and the bell element define a hollow space to insulate the multifunctional containing compartment mainly with respect to the cooking chamber.

The insulating hollow space is provided to reduce the transmission of heat, present in the cooking chamber and generated by the heating devices, to the multifunctional containing compartment.

The insulating function of the hollow space allows to insert, inside the multifunctional containing compartment, the electric and electronic apparatuses which serve to drive and control the functions of the autonomous apparatus because, thanks to these strategies described, the multifunctional containing compartment remains at a temperature coherent with the requirements of the electric and electronic apparatuses positioned here.

The positioning of the electric and electronic apparatuses in the multifunctional containing compartment allows to reduce the lateral and vertical bulk of the autonomous apparatus.

The hollow space can be completely closed, or, according to a variant embodiment, the hollow space has a plurality of through apertures, made in the lower wall of the lid and communicating with the multifunctional containing compartment.

In addition, in the multifunctional containing compartment a conveyor element can be provided that contains the motor member of the main ventilation device.

The conveyor element cooperates at the upper part with at least an entrance aperture of external air, to cool the motor member, and at the lower part with a plurality of holes through which the cooling air passes inside a protected compartment, in particular where the electric and electronic apparatuses are installed.

According to another embodiment, the autonomous apparatus comprises an auxiliary ventilation device that cooperates with the conveyor element to accentuate the cooling of the motor member.

According to a preferred embodiment, the auxiliary ventilation device can be disposed between the hollow space and the motor member.

Advantageously, in this way, the auxiliary ventilation device is disposed in correspondence with the hottest zone and facilitates the recirculation of the air.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a partial section view of an autonomous cooking apparatus;
- fig. 2 is a detailed view of the autonomous apparatus of fig.1 according to a variant embodiment;
- fig. 3 is a detailed view of the autonomous apparatus of fig.1 according to another variant embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

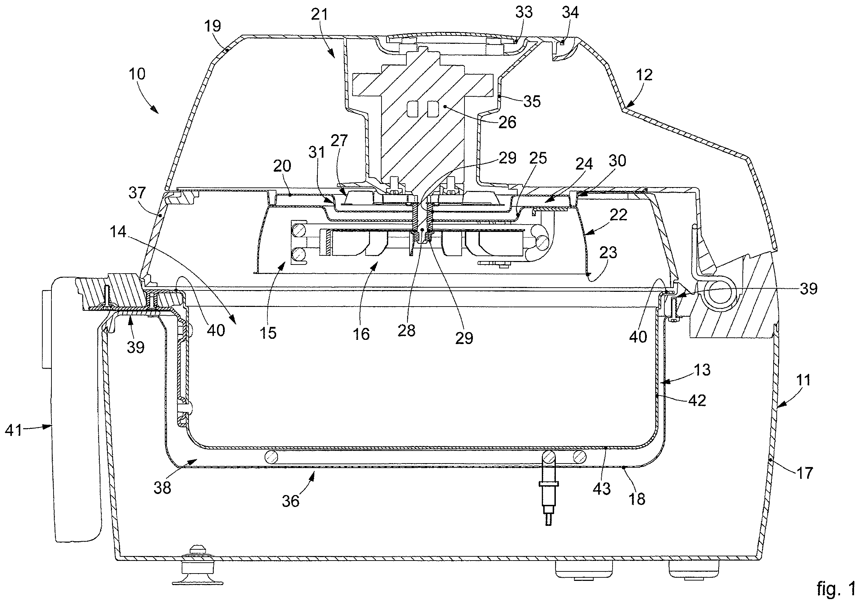

Embodiments described here in figs. 1 - 3 concern an autonomous apparatus 10 for cooking food.

The autonomous apparatus 10 comprises a support body 11, a lid 12 which can be opened/closed with respect to the support body 11, and a container 13.

The autonomous apparatus 10 also comprises at least one upper heating device 15, located above the container 13, and at least one main ventilation device 16 associated with the upper heating device 15.

The container 13 is open at the top and has a lateral wall 42 defined at the upper part by a support edge 40 and at the lower part by a bottom wall 43.

The support body 11 comprises an external wall 17 and an internal wall 18, in use adjacent to the container 13.

The internal wall 18 is configured in such a way as to be able to accommodate the container 13 inside it.

The support body 11 has circumferential support means 39 associated with the external wall 17.

The circumferential support means 39 are configured to support the support edge 40 of the container 13.

The association of the internal wall 18 and of the container 13, in the condition where the support edge 40 is in contact with the circumferential support means 39, defines an intermediate chamber 38.

According to a preferred embodiment, the autonomous apparatus 10 comprises a lower heating device 36 associated with the bottom wall 43 of the container 13 for cooking food.

In particular, the lower heating device 36 can be installed inside the intermediate chamber 38 to transfer heat toward the container 13.

According to one embodiment, shown by way of example in fig. 1, the container 13 can have a handle 41 configured to assume one or more positions with respect to the container 13.

The handle 41 is advantageously configured to cooperate at least at one point with the circumferential support means 39 and to make the support of the container 13 on the support body 11 more stable.

According to embodiments described here, the autonomous apparatus 10 can comprise a mixing device installed inside the container 13 and configured to mix the food contained inside.

The lid 12 in the closed condition defines, in cooperation with the container 13, a cooking chamber 14 for the food.

For example, the lid 12 can be hinged to the support body 11 in correspondence with the circumferential support means 39.

The lid 12 comprises an external casing 19 and a lower wall 20, facing toward the cooking chamber 14.

The external casing 19 is associated with the lower wall 20 and together these components define a substantially closed multifunctional containing compartment 21.

In this way, in association with the container 13 the lower wall 20 defines the cooking chamber 14, and in association with the external casing 19 it defines the multifunctional containing compartment 21.

The lower wall 20 is associated with a bell element 22 having an aperture 23 facing toward the container 13.

The upper heating device 15 and the main ventilation device 16 are installed inside the bell element 22.

In particular, the main ventilation device 16 cooperates circumferentially with the upper heating device 15.

The bell element 22 is configured to convey the flow of hot air generated by the main ventilation device 16 toward the food contained in the container 13.

According to one embodiment, shown by way of example in figs. 1 - 3, the aperture 23 is substantially circular and has a diameter sufficient to accommodate the upper heating device 15 and the main ventilation device 16.

The bell element 22 has an upper wall 25, opposite the aperture 23 and also circular.

According to one aspect of the present invention, the lower wall 20 of the lid 12 and the upper wall 25 of the bell element 22 are associated with each other to define a hollow space 24 for the insulation of the multifunctional containing compartment 21 from the heat generated in the cooking chamber 14.

In particular the hollow space 24 forms a cushion of air between the inside of the container 13 and the multifunctional containing compartment 21 which allow to insulate the latter from the heat.

Thanks to the presence of the hollow space 24, inside the multifunctional containing compartment 21 it is possible to insert electric and electronic equipment which manage the functioning of the cooking apparatus 10.

For example, electric and electronic equipment can comprise a control and command unit which can be advantageously installed near a user interface installed on the lid 12. In this way, the electric connection between the various devices can be mostly if not completely concentrated inside the multifunctional containing compartment 21.

Therefore, any maintenance and/or repair operations can be carried out mainly inside the multifunctional containing compartment 21.

According to embodiments described here, the lower wall 20 of the lid 12 has a circular continuous protruding element 30.

The protruding element 30 is made in such a way that when the bell element 22 is associated with the lower wall 20 of the lid 12, it goes into contact with the peripheral edge of the upper wall 25 of the bell element 22.

In this way, it is possible to obtain the hollow space 24 with a variable height according to requirements. In this specific case, the height of the hollow space 24 can be chosen based on the temperatures reached inside the cooking chamber 14 and based on the maximum temperature that can be reached inside the multifunctional containing compartment 21.

For example, the height of the hollow space 24 can be comprised within a range that goes from 4 mm to 20 mm.

According to a preferred solution, the wall 25 has a lowered portion 31 toward the inside of a cavity of the bell element 22, that is toward the upper heating device 15 and the main ventilation device 16, so as to be able to modulate the height of the hollow space 24 in a desired manner.

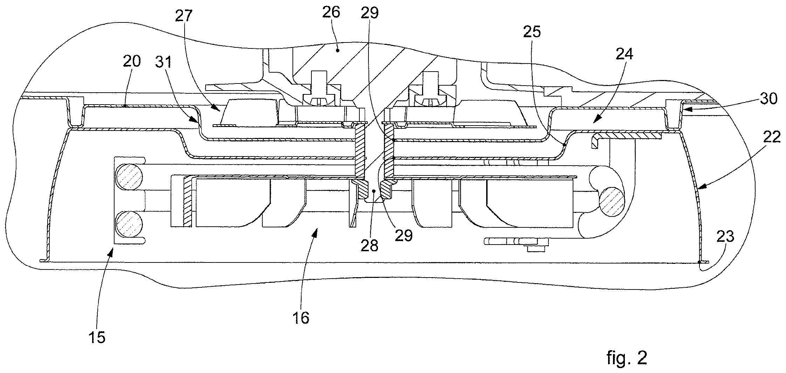

According to a variant embodiment, shown by way of example in fig. 2, the hollow space 24 is completely closed.

In this way, advantageously, the hollow space 24 causes a thermal break between the cooking chamber 14 and the multifunctional containing compartment 21, limiting the transmission of heat toward the multifunctional containing compartment 21 and therefore protecting the electric and electronic equipment from the heat.

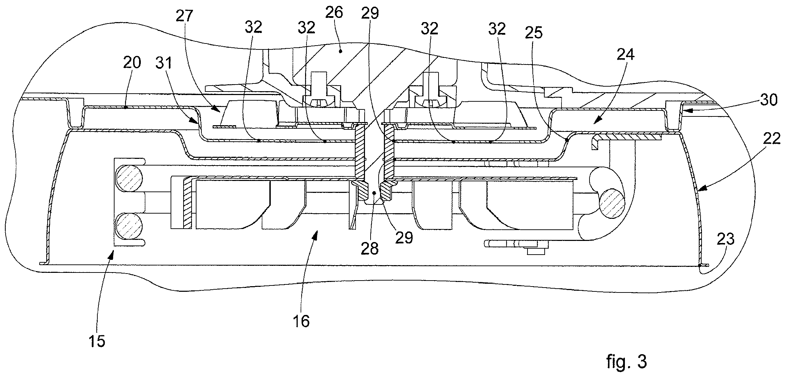

According to another variant embodiment, shown by way of example in fig. 3, the lower wall 20 of the lid 12 has a plurality of through apertures 32 which put the hollow space 24 and the multifunctional containing compartment 21 into communication with each other.

The through apertures 32 can be made at least partly in a portion of the lower wall 20 of the lid 12 enclosed by the protruding element 30.

In this way, through the through apertures 32 it is possible to determine a change of the air contained inside the air hollow space 24.

The autonomous apparatus 10 also comprises a motor member 26 installed inside the multifunctional containing compartment 21 and configured to drive at least the main ventilation device 16.

According to embodiments described here, the autonomous apparatus 10 can comprise another auxiliary ventilation device 27 installed inside the multifunctional containing compartment 21.

The auxiliary ventilation device 27 is associated with the motor member 26 in correspondence with a rotation shaft 28 of the latter.

The motor member 26 can be configured to drive the rotation of both the ventilation devices 16, 27.

The rotation shaft 28 passes through the upper wall 25 of the bell element 22 and the lower wall 20 of the lid 12 in correspondence with a passage hole 29 made for the purpose.

The passage hole 29 is preferably made in the center of the upper wall 25 of the bell element 22.

According to one embodiment, shown by way of example in fig. 1, the autonomous apparatus 10 can comprise a conveyor element 35 of a flow of cooling air disposed inside the multifunctional containing compartment 21, configured to direct the flow of air.

The conveyor element 35 can be disposed in axis with the cooking chamber 14.

Inside the conveyor element 35 the motor member 26 can be disposed, to enhance the cooling efficiency.

The conveyor element 35 defines, inside the multifunctional containing compartment 21 and above the lower wall 20 of the lid 12, a first protected compartment and a second protected compartment.

The first protected compartment, inside the conveyor element 35, is passed through by the flow of air to cool the motor member 26. The second protected compartment, comprised inside the multifunctional containing compartment 21 and outside the conveyor element 35, is passed through by the flow of air exiting from the conveyor element 35.

According to embodiments described here, electric and electronic equipment are present in the second protected compartment.

For example, the conveyor element 35 can have a substantially cylindrical development and can extend from the external casing 19 as far as the lower wall 20 of the lid 12.

According to embodiments described here, the external casing 19 of the lid 12 can have at least one air intake 33 cooperating with the conveyor element 35.

The external casing 19 can also have an outlet aperture 34 for the cooling air flow of the multifunctional containing compartment 21.

For example, the auxiliary ventilation device 27 can be configured to determine a suction of the air from outside the autonomous apparatus 10 and into the multifunctional containing compartment 21 through the inlet aperture 33.

Furthermore, the auxiliary ventilation device 27 can be configured to determine an air outlet from the multifunctional containing compartment 21, under pressure, through the outlet aperture 34.

According to a preferred solution, the inlet aperture 33 is disposed at least above the motor member 26.

The conveyor element 35 can be completely open at one end positioned in correspondence with the inlet aperture 33.

The conveyor element 35 is configured to aerodynamically connect the first protected compartment and the second protected compartment.

For example, in correspondence with the other end, the conveyor element 35 can have a plurality of holes for the passage of the air flow, to determine the passage from the first protected compartment to the second protected compartment of the multifunctional containing compartment 21.

Moreover, in correspondence with the plurality of passage holes, the auxiliary ventilation device 27 can be disposed in order to advantageously promote the passage of the air flow from the first protected compartment toward the second protected compartment of the multifunctional containing compartment 21, promoting its recirculation.

According to embodiments described here, the conveyor element 35 can define a seating in correspondence with a part thereof adjacent to the auxiliary ventilation device 27, in combination also with the lower wall 20 of the lid 12, to install the auxiliary ventilation device 27.

According to a variant embodiment, shown by way of example in figs. 1 - 3, the auxiliary ventilation device 27 is installed between the hollow space 24 and the motor member 26.

According to this variant embodiment, the ventilation devices 16, 27 are configured to be keyed onto the rotation shaft 28 of the motor member 26.

In this way, the auxiliary ventilation device 27 can determine a suction of the air from the outside, also allowing to cool the hollow space 24 and a rapid exchange of the air.

Furthermore, in combination with the variant embodiment of fig. 3, the auxiliary ventilation device 27 also determines a continuous exchange of air in the hollow space 24.

According to embodiments described here, the lower wall 20 of the lid 12 can also have a lowered portion 31 to promote the installation of the auxiliary ventilation device 27.

According to one embodiment, the lowered portion 31 of the lower wall 20 of the lid 12 is conformed in such a way as to define, in correspondence with the outlet of the auxiliary ventilation device 27, a reduction in section.

The reduction in section determines an increase in the speed of the air flows passing through it.

In this way, the reduction in section allows to increase the efficiency of the cooling and therefore insulation of the multifunctional containing compartment 21 by means of the auxiliary ventilation device 27.

According to another variant embodiment, the auxiliary ventilation device 27 can be disposed in a position opposite the hollow space 24 and with the motor member 26 interposed between them.

According to a preferred embodiment, the lower wall 20 of the lid 12 and the upper wall 25 of the bell element 22, or at least parts thereof, can be made of metal material, for example stainless steel, aluminum, or suchlike.

In this way, advantageously, the lower wall 20 of the lid 12 and the bell element 22 can be easily cleaned of residues deriving from the cooking process.

According to one embodiment, the lower wall 20 of the lid 12, or at least its surface directly facing the cooking chamber 14, is at least partly configured to increase the reflection of the heat waves to be directed toward the cooking chamber 14.

In another embodiment, at least the upper wall 25 of the bell element 22, or at least its surface directly facing the cooking chamber 14, is at least partly configured to increase the reflection of the heat waves to be directed toward the cooking chamber 14.

The portion of lower wall 20 facing toward the cooking chamber 14, and/or the upper wall 25 of the bell element 22, can be made of a material having a high reflectance index, in which by "reflectance index" we mean the ratio between the intensity of a reflected radiant flow and the intensity of a radiant flow incident on the lower surface of the lower wall 20 and/or of the wall 25 of the bell element 22.

For example, the lower wall 20 of the lid 12 and/or the upper wall 25 of the bell element 22 can be obtained by means of a chemical polishing, or a superfinishing mechanical processing, or by means of a particular painting which makes the surface reflecting, or can possibly be made of mirror-finished materials and/or coatings.

In this way, it is possible to increase the efficiency of the cooking process of the autonomous apparatus 10 by reflecting the heat waves toward the cooking chamber 14.

Moreover, the external casing 19 of the lid 12 can be provided with removable portions 37 disposed in correspondence with the lower wall 20 of the lid 12 and of the bell element 22. In this way, the cleaning of the lower wall 20 of the lid 12 and of the bell element 22 is further facilitated by the possibility of removing potential obstacles to cleaning.

The removable portions 37 are configured to determine, together with the support body 11, with the lid 12 closed, a more compact autonomous apparatus 10.

Moreover, the removable portions 37 define a more compact cooking chamber 14 to distribute the heat in a more homogeneous and effective way to cook the food.

It is clear that modifications and/or additions of parts can be made to the autonomous apparatus 10 as described heretofore, without departing from the scope of the present invention.

For example, a solution comes within the scope of the present invention in which the lower wall 20 is not directly part of the lid 12 but is part of the bell element 22, for example associated at the top of the upper wall 25, or is an autonomous element which forms the hollow space 24 with the upper wall 25.

It is also clear that, although the present invention has been described with reference to some specific examples, a person of skill in the art shall certainly be able to achieve many other equivalent forms of autonomous apparatus 10, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Autonomous apparatus for cooking food comprising a support body (11), a lid (12) which can be opened/closed with respect to said support body (11), a container (13) cooperating with said lid (12) in the closed condition so as to define a cooking chamber (14), said autonomous apparatus also comprising at least an upper heating device (15) located above said container (13), and at least a main ventilation device (16) associated with said upper heating device (15), said lid (12) comprising an external casing (19), and a lower wall (20), facing toward said cooking chamber (14), said external casing (19) and said lower wall (20) defining a multifunctional containing compartment (21), substantially closed in order to house at least a motor member (26) to drive at least said main ventilation device (16), wherein said lower wall (20) is associated with a bell element (22), located below said lower wall (20) and having an aperture (23) facing toward said container (13) and an upper wall (25), said upper heating device (15) and said main ventilation device (16) being installed inside said bell element (22) and below said upper wall (25), so as to be directly facing inside said container (13), said upper wall (25) facing toward said lower wall (20) of said lid (12), between said upper wall (25) of the bell element (22) and said lower wall (20) of said lid (12) being defined a hollow space (24) forming a cushion of air to insulate between the inside of said container (13) and said multifunctional containing compartment (21) from the heat, and wherein said lower wall (20) is provided with a downwardly protruding element (30) contacting a peripheral edge of said upper wall (25) to define the height of said hollow space (24), and wherein the apparatus comprises an auxiliary ventilation device (27) driven by said motor member (26) and being located inside said multifunctional containing compartment (21) and above said lower wall (20) of said lid (12).

2. Autonomous apparatus as in claim 1, **characterized in that** said hollow space (24) is closed.

3. Autonomous apparatus as in claim 1, **characterized in that** said lower wall (20) has a plurality of through apertures (32) that connect said hollow space (24) and said multifunctional containing compartment (21).

4. Autonomous apparatus as in any claim hereinbefore, **characterized in that** in said multifunctional containing compartment (21) there is a conveyor element (35) in which said motor member (26) is disposed to drive said main ventilation device (16), said conveyor element (35) cooperating with at least one air intake (33), advantageously upper, and disposed in axis with said cooking chamber (14).

5. Autonomous apparatus as in claim 4, **characterized in that** said conveyor element (35) defines inside said multifunctional containing compartment (21) and above said lower wall (20) a first protected compartment, inside said conveyor element (35), and a second protected compartment.

6. Autonomous apparatus as in claim 5, **characterized in that** said conveyor element (35) is configured to aerodynamically connect to each other said first protected compartment and said second protected compartment.

7. Autonomous apparatus as in claim 1, **characterized in that** said lower wall (20) has a lowered portion (31) conformed to define, in correspondence with the exit from said auxiliary ventilation device (27), a reduction in section.

8. Autonomous apparatus as in any claim hereinbefore, **characterized in that** said lower wall (20) and/or said bell element (22) are configured to increase the reflection of heat waves to be directed toward said cooking chamber (14).

9. Autonomous apparatus as in claim 8, **characterized in that,** at least for the portion directly facing the cooking chamber (14), said lower wall (20) and/or said bell element (22) are obtained by means of chemical polishing, or a mechanical super-finishing working, or by a particular painting which makes the surface reflective, or possibly are made of materials and/or coatings that are mirror-finished.

10. Autonomous apparatus as in any claim from 4 to 9, **characterized in that** inside said bell element (22) there is said main ventilation device (16), in axis with said motor member (26) and cooperating circumferentially with said upper heating device (15).

11. Autonomous apparatus as in any claim from 5 to 10, **characterized in that** electric and electronic apparatuses are present in said second protected compartment.

## Patentansprüche

1. Autonome Vorrichtung zum Kochen von Nahrungsmitteln, umfassend einen Stützkörper (11), einen Deckel (12), der in Bezug auf den Stützkörper (11) geöffnet/geschlossen werden kann, einen Behälter (13), der mit dem Deckel (12) im geschlossenen Zustand kooperiert, so dass eine Kochkammer (14) definiert wird, wobei die autonome Vorrichtung außerdem mindestens eine oberhalb des Behälters (13) angeordnete obere Heizvorrichtung (15) und mindestens eine mit der oberen Heizvorrichtung (15) verbundene Hauptbelüftungsvorrichtung (16) umfasst, wobei der Deckel (12) ein Außengehäuse (19) und eine der Kochkammer (14) zugewandte untere Wand (20) umfasst, wobei das Außengehäuse (19) und die untere Wand (20) einen multifunktionellen Aufnahmeraum (21) definieren, der im Wesentlichen geschlossen ist, um mindestens ein Motorelement (26) zum Antrieb zumindest der Hauptbelüftungsvorrichtung (16) aufzunehmen, wobei die untere Wand (20) mit einem glockenförmigen Element (22) verbunden ist, das unterhalb der unteren Wand (20) angeordnet ist und eine dem Behälter (13) zugewandte Öffnung (23) und eine obere Wand (25) aufweist, wobei die obere Heizvorrichtung (15) und die Hauptbelüftungsvorrichtung (16) innerhalb des glockenförmigen Elements (22) und unterhalb der oberen Wand (25) eingebaut sind, so dass sie inwendig direkt dem Behälter (13) zugewandt sind, wobei die obere Wand (25) der unteren Wand (20) des Deckels (12) gegenüberliegt, wobei zwischen der oberen Wand (25) des glockenförmigen Elements (22) und der unteren Wand (20) des Deckels (12) ein Hohlraum (24) definiert wird, der ein Luftpolster bildet, um zwischen der Innenseite des Behälters (13) und dem multifunktionellen Aufnahmeraum (21) Wärmeisolation bereitzustellen, und wobei die untere Wand (20) mit einem nach unten vorstehenden Element (30) versehen ist, das mit einem peripheren Rand der oberen Wand (25) in Kontakt steht, um die Höhe des Hohlraums (24) zu definieren, und wobei die Vorrichtung eine Hilfsbelüftungsvorrichtung (27) umfasst, die durch das Motorelement (26) angetrieben wird und im Inneren des multifunktionellen Aufnahmeraums (21) und oberhalb der unteren Wand (20) des Deckels (12) angeordnet ist.

2. Autonome Vorrichtung gemäß Anspruch 1, **dadurch gekennzeichnet, dass** der Hohlraum (24) geschlossen ist.

3. Autonome Vorrichtung gemäß Anspruch 1, **dadurch gekennzeichnet, dass** die untere Wand (20) eine Vielzahl an Durchgangsöffnungen (32) aufweist, die den Hohlraum (24) und den multifunktionellen Aufnahmeraum (21) verbinden.

4. Autonome Vorrichtung gemäß irgendeinem vorhergehenden Anspruch, **dadurch gekennzeichnet, dass** in dem multifunktionellen Aufnahmeraum (21) ein Förderelement (35) vorliegt, in dem das Motorelement (26) untergebracht ist, um die Hauptbelüftungsvorrichtung (16) anzutreiben, wobei das Förderelement (35) mit mindestens einem Lufteinlass (33) kooperiert, der vorteilhafterweise oberhalb und in einer Achse mit der Kochkammer (14) angeordnet ist.

5. Autonome Vorrichtung gemäß Anspruch 4, **dadurch gekennzeichnet, dass** das Förderelement (35) im Inneren des multifunktionellen Aufnahmeraums (21) und oberhalb der unteren Wand (20) einen ersten geschützten Raum innerhalb des Förderelements (35) und einen zweiten geschützten Raum definiert.

6. Autonome Vorrichtung gemäß Anspruch 5, **dadurch gekennzeichnet, dass** das Förderelement (35) so konfiguriert ist, dass es den ersten geschützten Raum und den zweiten geschützten Raum aerodynamisch miteinander verbindet.

7. Autonome Vorrichtung gemäß Anspruch 1, **dadurch gekennzeichnet, dass** die untere Wand (20) einen abgesenkten Abschnitt (31) aufweist, der so ausgebildet ist, dass er, in Entsprechung mit dem Ausgang aus der Hilfsbelüftungsvorrichtung (27), eine Querschnittsverminderung definiert.

8. Autonome Vorrichtung gemäß irgendeinem vorhergehenden Anspruch, **dadurch gekennzeichnet, dass** die untere Wand (20) und/oder das glockenförmige Element (22) so konfiguriert sind, dass sie die Reflexion von Wärmewellen erhöhen, um diese auf die Kochkammer (14) zu richten.

9. Autonome Vorrichtung gemäß Anspruch 8, **dadurch gekennzeichnet, dass**, zumindest in Bezug auf den Abschnitt, der direkt der Kochkammer (14) gegenüberliegt, die untere Wand (20) und/oder das glockenförmige Element (22) durch chemisches Polieren oder eine mechanische Superfinish-Bearbeitung oder durch einen speziellen Farbauftrag, der die Oberfläche reflektierend macht, erhalten werden, oder gegebenenfalls aus hochglanzpolierten Materialien und/oder Beschichtungen gefertigt sind.

10. Autonome Vorrichtung gemäß irgendeinem der Ansprüche 4 bis 9, **dadurch gekennzeichnet, dass** innerhalb des glockenförmigen Elements (22) die Hauptbelüftungsvorrichtung (16) in einer Achse mit dem Motorelement (26) vorliegt und umlaufend mit der oberen Heizvorrichtung (15) kooperiert.

11. Autonome Vorrichtung gemäß irgendeinem der Ansprüche 5 bis 10, **dadurch gekennzeichnet, dass** in dem zweiten geschützten Raum elektrische und elektronische Vorrichtungen vorliegen.

## Revendications

1. Appareil autonome de cuisson d'aliments comprenant un corps de support (11), un couvercle (12) qui peut être ouvert/fermé par rapport audit corps de support (11), un récipient (13) coopérant avec ledit couvercle (12) dans l'état fermé de manière à délimiter une chambre de cuisson (14), ledit appareil autonome comprenant également au moins un dispositif de chauffage supérieur (15) situé au-dessus dudit récipient (13), et au moins un dispositif de ventilation principal (16) associé audit dispositif de chauffage supérieur (15), ledit couvercle (12) comprenant un boîtier externe (19), et une paroi inférieure (20), faisant face à ladite chambre de cuisson (14), ledit boîtier externe (19) et ladite paroi inférieure (20) définissant un compartiment de confinement multifonctionnel (21), sensiblement fermé afin de loger au moins un élément moteur (26) pour entraîner au moins ledit dispositif de ventilation principal (16), dans lequel
ladite paroi inférieure (20) est associée à un élément en cloche (22), situé sous ladite paroi inférieure (20) et ayant une ouverture (23) faisant face audit récipient (13) et une paroi supérieure (25), ledit dispositif de chauffage supérieur (15) et ledit dispositif de ventilation principal (16) étant installés à l'intérieur dudit élément en cloche (22) et en dessous de ladite paroi supérieure (25), de manière à faire face directement à l'intérieur dudit récipient (13), ladite paroi supérieure (25) faisant face à ladite paroi inférieure (20) dudit couvercle (12), entre ladite paroi supérieure (25) de l'élément en cloche (22) et ladite paroi inférieure (20) dudit couvercle (12) étant défini un espace creux (24) formant un coussin d'air pour isoler entre l'intérieur dudit récipient (13) et ledit compartiment de confinement multifonctionnel (21) de la chaleur, et dans lequel ladite paroi inférieure (20) est pourvue d'un élément (30) faisant saillie vers le bas venant en contact avec un bord périphérique de ladite paroi supérieure (25) pour définir la hauteur dudit espace creux (24), et dans lequel l'appareil comprend un dispositif de ventilation auxiliaire (27) entraîné par ledit élément moteur (26) et étant situé à l'intérieur dudit compartiment de confinement multifonctionnel (21) et au-dessus de ladite paroi inférieure (20) dudit couvercle (12).

2. Appareil autonome selon la revendication 1, **caractérisé en ce que** ledit espace creux (24) est fermé.

3. Appareil autonome selon la revendication 1, **caractérisé en ce que** ladite paroi inférieure (20) présente une pluralité d'ouvertures traversantes (32) qui relient ledit espace creux (24) et ledit compartiment de confinement multifonctionnel (21).

4. Appareil autonome selon l'une quelconque des revendications précédentes, **caractérisé en ce que** dans ledit compartiment de confinement multifonctionnel (21) se trouve un élément transporteur (35) dans lequel ledit élément moteur (26) est disposé pour entraîner ledit dispositif de ventilation principal (16), ledit élément transporteur (35) coopérant avec au moins une entrée d'air (33), avantageusement supérieure, et disposée dans l'axe de ladite chambre de cuisson (14).

5. Appareil autonome selon la revendication 4, **caractérisé en ce que** ledit élément transporteur (35) définit à l'intérieur dudit compartiment de confinement multifonctionnel (21) et au-dessus de ladite paroi inférieure (20) un premier compartiment protégé, à l'intérieur dudit élément transporteur (35), et un second compartiment protégé.

6. Appareil autonome selon la revendication 5, **caractérisé en ce que** ledit élément transporteur (35) est configuré pour connecter de manière aérodynamique l'un à l'autre ledit premier compartiment protégé et ledit second compartiment protégé.

7. Appareil autonome selon la revendication 1, **caractérisé en ce que** ladite paroi inférieure (20) présente une partie abaissée (31) conformée pour définir, en correspondance avec la sortie à partir dudit dispositif auxiliaire de ventilation (27), une réduction de section.

8. Appareil autonome selon l'une quelconque des revendications précédentes, **caractérisé en ce que** ladite paroi inférieure (20) et/ou ledit élément en cloche (22) sont configurés pour augmenter la réflexion d'ondes de chaleur à diriger vers ladite chambre de cuisson (14).

9. Appareil autonome selon la revendication 8, **caractérisé en ce qu'**au moins pour la partie faisant face directement à la chambre de cuisson (14), ladite paroi inférieure (20) et/ou ledit élément en cloche (22) sont obtenus au moyen d'un polissage chimique, ou d'un usinage de super finition mécanique, ou par une peinture particulière qui rend la surface réfléchissante, ou facultativement sont constitués de matériaux et/ou de revêtements à finition miroir.

10. Appareil autonome selon l'une quelconque des revendications 4 à 9, **caractérisé en ce qu'**à l'intérieur dudit élément de cloche (22) se trouve ledit dispositif de ventilation principal (16), dans l'axe avec ledit élément moteur (26) et coopérant circonférentiellement avec ledit dispositif de chauffage supérieur (15).

11. Appareil autonome selon l'une quelconque des revendications 5 à 10, **caractérisé en ce que** des appareils électriques et électroniques sont présents dans ledit second compartiment protégé.
